# EUROPEAN PATENT APPLICATION

(11) **EP 2 580 995 A1**
(43) Date of publication of application: **17.04.2013**
(21) Application number: 12188449.8
(22) Date of filing: 12.10.2012
(51) Int. Cl.: A47C 17/80

(54) **Binding device for beds of recreational vehicle provided with a belt lifting system**

(30) Priority: 13.10.2011 IT PI20110115
(71) Applicant: ST.LA.Srl, 56025 Pontedera (PI) (IT)
(72) Inventor: Zappolini, Stefano, 56020 Montopoli V.A. (PI) (IT)
(74) Representative: Leotta, Antonio

(57) **Abstract**

A binding device for beds of recreational vehicles provided with a belt lifting system comprises vertical rails and binding means comprising at least two vertically spaced sliding portions each provided with rolling elements. The binding device of the present invention allows to keep the bed in a horizontal configuration even in the presence of strongly unbalanced loads.

## Description

### TECHNICAL FIELD

Binding device for beds of recreational vehicles provided with a belt lifting system, in which a bed comprises a substantially rectangular shape and a lifting system comprising elongated flexible members which can be fastened at one end at a supporting structure of the vehicle which is over the frame, with the elongated flexible members bending about a side a the frame and being further fastened at their other end to a lifting mechanism mounted in the frame and able to shorten and make longer the elongated flexible members for lifting respectively lowering the bed, and in which the bed is bound to vertically slide while remaining in a horizontal configuration by vertical rails integral to the vehicle's walls where slide members integral to the bed's frame are coupled to run within.

### BACKGROUND ART

In recreational vehicles,. such as campers, caravans, yachts and other leisure craft, is deeply felt the need to optimize the interior of the vehicle for which different types of furnishings, including beds and tables in particular, are equipped of shifting devices which allow to modify the position between a use configuration and a non-use position in which must be minimized their encumbrance of the volume inside the vehicle. Very often the aforementioned shifting consists of a vertical translation.

To obtain the vertical translation are known, and involve numerous advantages compared to other types of apparatuses, belt lifting devices, used in particular for beds, in which the structure to be translated is supported by belts which are wound and unwound in order to obtain the lifting respectively lowering of the bed. The belt lifting devices allow a very effective handling with low costs of the components of the lifting device and a slim and lightweight structure of the device, however the bed bound and supported exclusively by the belt lifting system is unstable and is very likely that as a result of unbalanced loads lose the horizontal configuration. For these reasons, together with the belt lifting systems are usually used guidance devices that keep the bed to remain in horizontal configuration during the vertical translation. In particular there are guide devices in which the vertical rails are integral with two opposite walls of a recreational vehicle and sliding elements integral with the frame of the bed are constrained to slide within these rails. For example, in U.S. 2007/0226901 A1 is described a bed for recreational vehicles equipped with a belt lifting device which provides vertical rails with a "C" profile integrated in the walls of the vehicle and wheels with horizontal axis integral with the frame of the bed which run in these tracks. The lifting belts lie within a channel defined by the rails and are therefore protected from view and from possible damage. The binding mechanism prevents horizontal movement of the bed and helps to maintain the horizontal configuration during vertical movements. However, the aforementioned binding device generates very high friction in the case that the bed tends to move horizontally during the vertical movement and does not guarantee the horizontal configuration in the case of unbalanced loads imposed on the bed itself.

### SUMMARY OF INVENTION

It is an object of the present invention to propose a binding device for beds of recreational vehicles provided with a belt lifting system, in which the binding device has an improved structure.

In particular, it is object of the present invention to propose a binding device having very low cost that allows to effectively keep the bed in horizontal configuration with generating low friction during the vertical movement.

According to an aspect of the present invention, the above objects are achieved by means of a binding device for beds of recreational vehicles provided with a belt lifting system, in which the bed comprises at least one frame and the corresponding lifting system comprises elongated flexible elements which can be fastened at one end at a supporting structure of the vehicle which is above the frame. With the elongated flexible member bending about a side of the frame and being further fastened at their other end to a lifting mechanism mounted in the frame and able to shorten and make longer said elongated flexible members for lifting respectively lowering the bed, and in which the bed is bound by vertical rails integral to the walls of the vehicle with binding means integral to the frame sliding within, and in which the binding means comprises connecting portions for connecting to the frame and made for let the elongated flexible member pass through them, and at least two vertically spaced sliding portions, each of the sliding portions providing freely rotating members bound to move along the rail.

Thanks to the presence of two vertically spaced sliding portions, which run in the same track, the bed is bound to remain in horizontal configuration even in the presence of strongly unbalanced loads.

Advantageously, the sliding portions are spaced vertically at least 5 cm and the relative sliding elements are two horizontally spaced substantially spherical elements which are rotatable about a horizontal axis, each constrained to move in a housing channel of the rail member.

Still advantageously, the binding means as described above, ie with two vertically spaced sliding portions, are two in number and they are arranged on the same side of the frame. The presence of two binding means as outlined above, which are constrained to move in two different rails on the same side of the frame is sufficient to effectively constrain the bed in order to prevent it from leaving the horizontal configuration even in the presence of strongly unbalanced loads.

According to a preferred embodiment the binding means are such that a first sliding portion is located substantially at the level of the lower side of the frame and a second sliding portion is located at the level of the upper side of the frame.

Alternatively a first sliding portion is located substantially at the level of the lower side of the frame and a second sliding portion is located below the first sliding portion.

### BRIEF DESCRIPTION OF DRAWINGS

These and more advantages of the device of the invention will be more promptly comprehensible by disclosing preferred embodiments, not limiting, as described in the following with reference to the appended drawings, in which:
- figure 1 shows a schematic top view of a bed provided with a belt lifting system and installed in a recreational vehicle;
- figure 2 shows a side of view of the bed of Fig. 1;
- figure 3 shows a detailed view of Fig. 2, in partial section, representing a binding device according to the invention;
- figure 4 shows a schematic section view taken along line IV-IV of Fig. 3;
- figure 5 shows, in a section view similar to the one of Fig. 4, a component of the binding device of the invention;
- figure 6 shows a section view similar to the one of Fig. 3 of a different embodiment of a binding device according to the invention.

### DESCRIPTION OF EMBODIMENTS

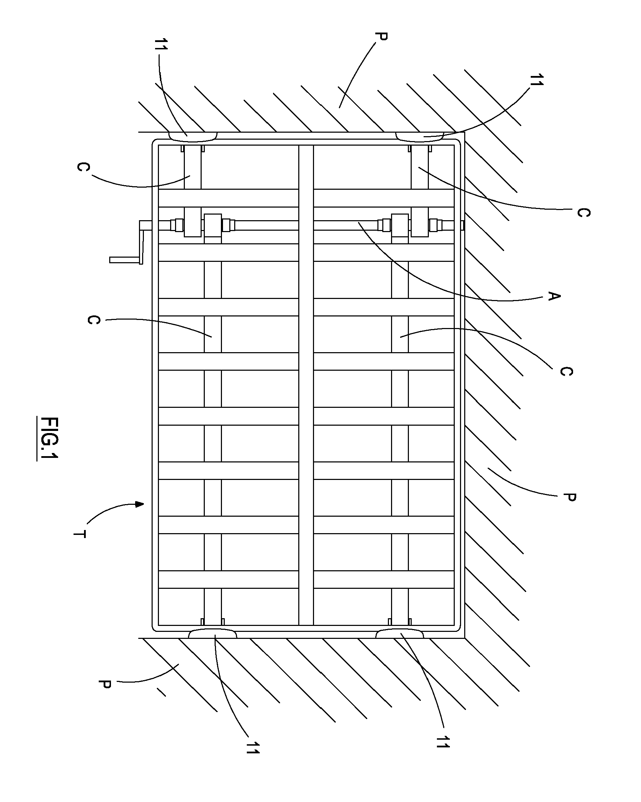

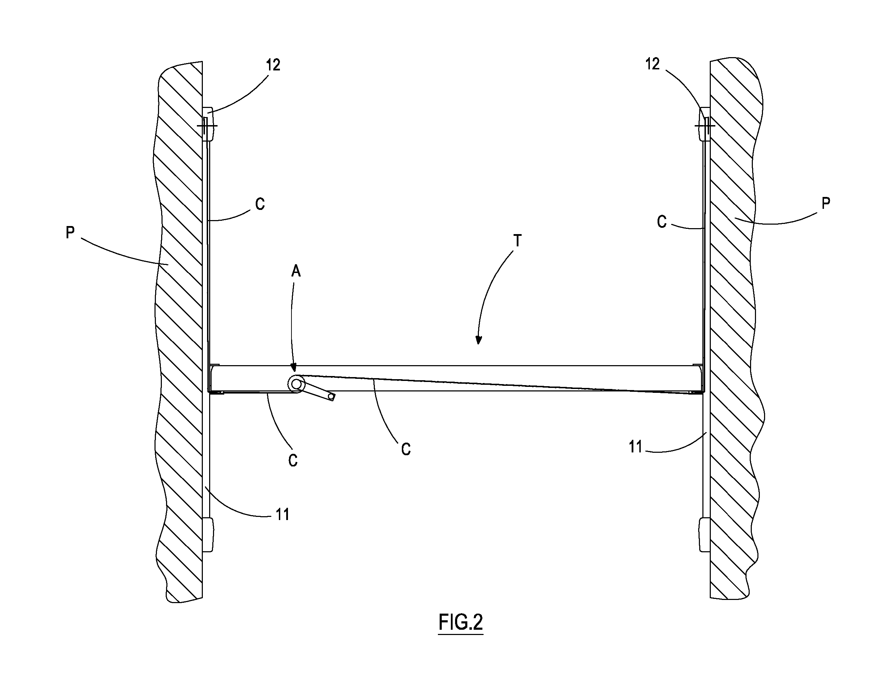

With reference to Figures 1 and 2 it is indicated as a whole with T the frame of a bed for recreational vehicles, whose walls are indicated with P. The frame is provided with a belt lifting system comprising, very schematically, a rotary shaft, A, mounted in the frame T so as to be able to to wound two pairs of belts, C, which bend around two opposite sides of the frame T and are fixed at their ends to the walls P of the vehicle above the frame T. Vertical rails, 11, are integral with the walls P by forming channels for the passage of the belts C in their run between the frame T and the upper fastening means. Advantageously, fastening means, 12, for fastening the belts C to the walls P are integrated into end portions of the upper rails 11.

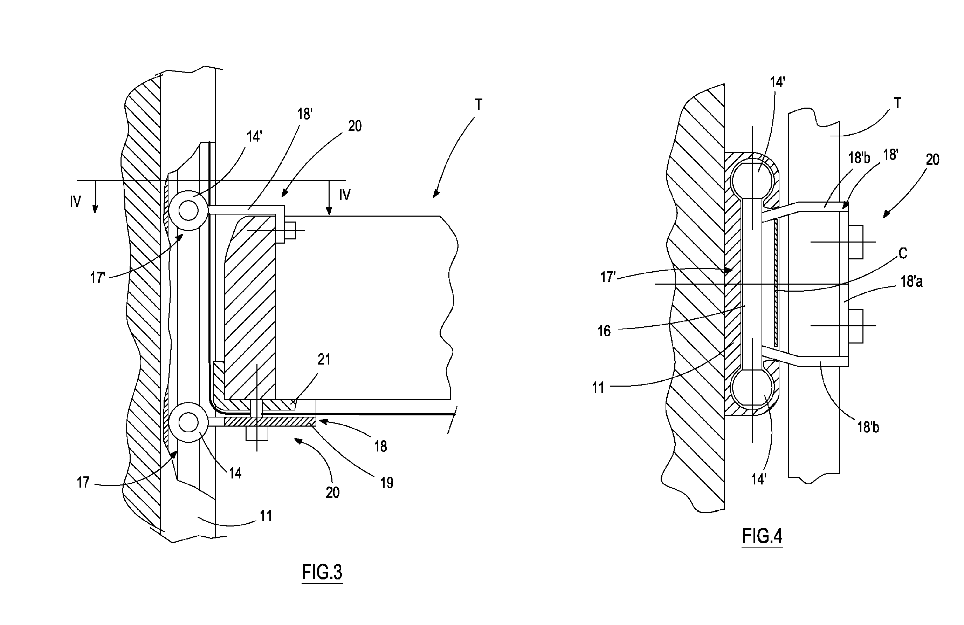

With reference to Figures 3 and 4 the rails 11 have such section as to generate housing channels, 13, for coupling elements, 14, 14 ', integral with the frame T and a housing channel, 15, for a belt C. The coupling elements 14, 14 'are substantially spherical elements rotatable about a horizontal axis identified by a support pin, 16, 16' which, together with the rotary elements 14, 14 'constitutes a sliding portion, 17, 17' of the binding means, 20, substantially composed of a connecting portion, 18, 18 ' for connecting to the frame T and the aforementioned sliding portion.

In particular the binding means 20 comprises at least two sliding portions 17, 17 'vertically spaced at least 5 cm. The presence of sliding portions vertically spaced in a same binary constrains the frame in an effective way to remain in horizontal configuration even in the presence of strongly unbalanced loads with respect to the center of gravity of the bed. The above constraint is even more effective if it has the presence of two vertically spaced sliding portions for at least two spaced rails 11 bound to a same wall P.

In the embodiment of Fig. 3 a first sliding portion 17 is located at the level of the lower side of the frame T and a second sliding portion 17' is located in correspondence of the upper side of the frame T. This configuration is particularly advantageous in that it is particularly easy to provide proper means for binding the related connecting portions 18, 18' to the frame. The connecting portion 18 includes a lower constraining member, 19, and an upper constraining member, 21, which create a passage channel for the belt C which is thus prevented from moving in a cross direction so that it remains in the channel 15 defined by rail 11. The upper constraining member is advantageously an element with a low coefficient of friction and / or a self-lubricating element in order to allow easy sliding of the belt C without causing wear.

The shape of the connecting portion 18' is such as to allow the passage of the belt C without interfering with it. For this purpose the connecting portion 18' includes a connecting element, 18'a, provided with holes for the connection to the frame T, and two support arms, 18'b, which connect the connecting element to the sliding portion 17' form a central opening through which the belt C can slide.

The rotary elements 14, 14' of substantially spherical shape, and the shape of its housing channels 13 can be used to constrain the binding means 20 to slide in the rail 11 by effectively preventing movements in a cross direction as each sliding portion has two elements independently bound with cross directed movement prevented in both directions, and moreover, thanks to the spherical shape, friction is greatly reduced. The constraint defined by the presence of a sliding portion 17 in each of the four rails 11 (two per side) should ideally be sufficient to maintain the bed in a horizontal configuration during the vertical movements, however, in the absence of the second sliding portion 17', to because of the coupling clearance and in the presence of strong unbalanced loads, the frame tends to lose the horizontal configuration by creating very high friction between the rail 11 and the sliding portion thereof 17, friction which renders the vertical movement more difficult and causes deformation of the components. For these reasons it is necessary to provide a second sliding portion 17' for each binary 11 at least on one side of the frame T.

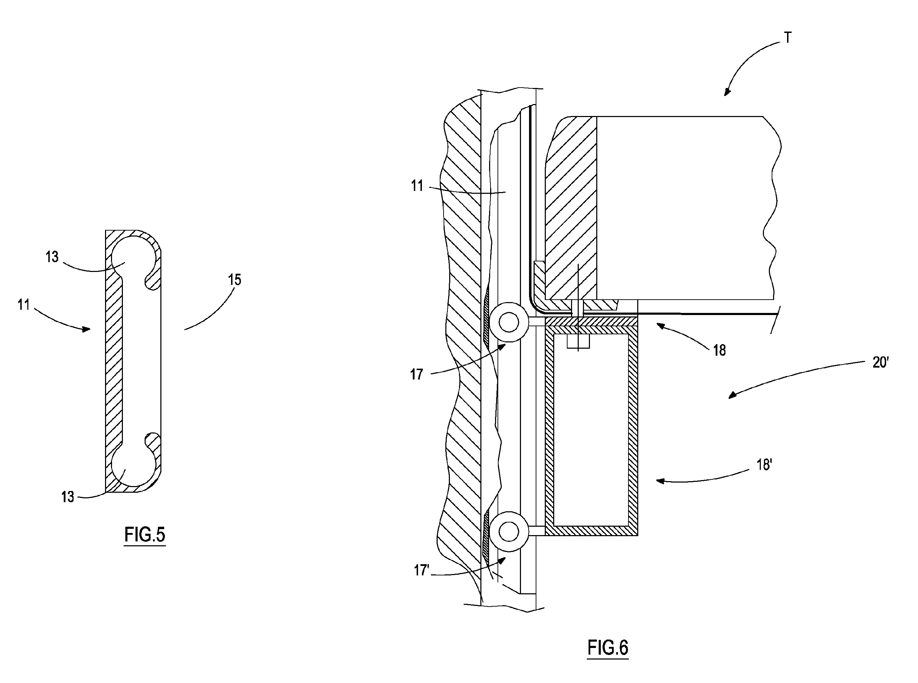

In fig. 6 it is shown a different embodiment of the invention in which the second sliding portion 17' is located below the first sliding portion 17, at a distance of about 10 cm from it. The sliding portion 17' is integral with the slide portion 17 via the connecting portion 18' which forms a spacer element attachable to the frame T through the same screw means which connects the connecting portion 18. In this solution, the connection means 18' do not need be shaped so as to allow the passage of the belt C but the present embodiment involves greater dimensions in height of the binding means, 20'.

The features and advantages described above of the binding device of the present invention for beds provided with belt lifting system obviously remain unchanged even in the presence of further embodiments, modifications or variations of applicative nature.

For example the rotary elements 14, 14' and the related housing channels 13 of the rails 11 may be shaped differently and also the connecting portions 18, 18' may have a different conformation, however, useful to make the sliding portions 17, 17' integral with the frame T.

The belts C, or other types of flexible elongated elements, which in the examples described are two per side may be even in lower or greater number on each side, depending on the weight to be supported and the rails themselves 11 may be equal in number, or even in a different number, greater or lesser.

These and other variations or modifications may be made to the binding device of the present invention, still remaining within the scope of protection defined by the following claims.

## Claims

1. Binding device for beds of recreational vehicles provided with a belt lifting system, in which a bed comprises at least a frame (T) and said lifting system comprises elongated flexible members (C) which can be fastened at one end at a supporting structure (P) of said vehicle which is over said frame (T), with said elongated flexible members (C) bending about a side of said frame (T) and being further fastened at their other end to a lifting mechanism (A) mounted in said frame (T) and able to shorten and make longer said elongated flexible members (C) for lifting and respectively lowering said bed, and in which said bed is bound by vertical rails (11) integral to the walls (P) of said vehicle with binding means (20) integral to said frame (T) sliding within, **characterized in that** said binding means (20) comprise connecting portions (18) for connecting to said frame and made for let said elongated flexible member (C) pass through them, and at least two vertically spaced sliding portions (17, 17'), each of the sliding portions (17, 17') providing freely rotating members (14, 14') bound to move along said rail (11).

2. Binding device according to claim 1 **characterized in that** said sliding portions (17, 17') are vertically spaced at least of an amount of 5 cm.

3. Binding device according to claim 1 or 2 **characterized in that** said freely rotating members (14, 14') are in number of two, horizontally spaced, substantially spherically shaped and rotating about an horizontal axis, each of them being bound to move in a housing channel (13) thereof of said rail (11).

4. Binding device according to any preceding claim **characterized in that** said binding means are in an amount of two, placed on a same side of said frame (T).

5. Binding device according to any preceding claim **characterized in that** a first portion (18) of said at least two sliding portions is placed substantially at the height of the bottom side of said frame (T) and the second portion (18') of said at least two sliding portions (18, 18') is placed substantially at the height of the top side of said frame (T).

6. Binding device according to any claim 1 to 4 **characterized in that** a first portion (18) of said at least two sliding portions is placed substantially at the height of the bottom side of said frame (T) and the second portion (18') of said at least two sliding portions (18, 18') is placed under said first portion (18).
